# EUROPEAN PATENT SPECIFICATION

(11) **EP 0 929 600 B1**
(45) Date of publication and mention of the grant of the patent: **21.11.2007**
(21) Application number: 97943434.7
(22) Date of filing: 22.09.1997
(51) Int. Cl.: C08K 3/00, C08L 77/00

(54) **COLOR STABLE FLAME RETARDED POLYAMIDE RESIN**
FARBSTABILES FLAMMGESCHÜTZTES POLYAMIDHARZ
RESINE POLYAMIDE IGNIFUGEE A COULEUR STABLE

(30) Priority: 30.09.1996 US 27066 P
(43) Date of publication of application: 21.07.1999
(73) Proprietor: E.I. DU PONT DE NEMOURS AND COMPANY, Wilmington, Delaware 19898 (US)
(72) Inventor: MIYABO, Atsushi, Jyobodai-in cho, Fushimi-ku, Kyoto 612 (JP); KOSHIDA, Reiko, Yokohama 223 (JP)
(74) Representative: Carpmaels & Ransford
(86) International application number: PCT/US1997/016819
(87) International publication number: WO 1998/014510

(56) References cited:
- EP-A- 0 410 301
- US-A- 4 105 621
- DATABASE WPI Section Ch, Week 9431 Derwent Publications Ltd., London, GB; Class A23, AN 94-253002 XP002049839 & JP 06 184 431 A (ASAHI KASEI KOGYO KK) , 5 July 1994
- DATABASE WPI Section Ch, Week 9431 Derwent Publications Ltd., London, GB; Class A13, AN 94-253001 XP002049840 & JP 06 184 430 A (ASAHI KASEI KOGYO KK) , 5 July 1994

## Description

### BACKGROUND OF THE INVENTION

Recent trends in surface mount technology (SMT) connectors require that the connectors have high heat stability and good flammability performance.

Among thermoplastic resins used for SMT connector applications, such as aromatic polyamides, 46 nylons, polyphenylene sulfide and liquid crystal polymers, a flame retardant should be used with the thermoplastic resin such that the resulting composition is V-0 according to the UL94 flammability test.

However, a problem with conventional compositions of a flame retardant and a thermoplastic resin is that when the compositions are extruded or molded, the compositions sometimes suffer a decrease in the quality of the color of the composition. For example, the composition may have a black streak or a brown substance that is believed to be due primarily to the decomposition of flame retardant.

ICI US Patent 4,105,621 discloses polyamide compositions containing glass fiber, halogenated flame retardant, zinc borate and a group of oxides including that of antimony. It does not recognize or suggest the problem of color stability upon molding.

BASF EP 410,301 discloses polyamide compositions containing brominated compounds, fillers clastomer polymer and "synergistic metal oxide and/or metal borate." Again color stability is not suggested.

### SUMMARY OF THE INVENTION

This invention relates to the use of from 0.1 to 4 wt% zinc borate for improving the colour stability of a polyamide resin-containing molding composition comprising 20-80 wt% of a polyamide having a melting point of from 280°C to 340°C; 0 to 50 wt% of an inorganic filler; 10 to 35 wt% of a flame retardant with 50-70 wt% bromine; and 1 to 10 wt% of an antimony compound, where the above weight percents are based upon the total amount of polyamide, inorganic filler, flame retardant, antimony compound and zinc borate only.

The present invention allows an expansion of the use of halogen type flame retardants in polyamides using antimony oxides with a longer resin hold up times in an extruder or molding device while obtaining an improved color quality.

The polyamide used in this invention may be any polyamide that has a melting point of from about 280°C to about 340°C. An example of a suitable polyamide is a copolyamide composed of 20-80 mole % of units derived from hexamethylene terephthalamide and 80-20 mole % of units derived from hexamethylene adipamide. This polyamide is referred to hereinafter as 6T/66. copolymer. Other suitable polyamides include polyamides composed of 20-80 mole % of units derived from hexamethylene terephthalamide and 80-20 mole % of units derived from hexamethylene sebacamide, hexamethylene dodecamide, hexamethylene isophthalamide. 2-methylpentamethylene terephthalamide, or mixtures thereof:

There are no particular limitations on the process for the production of the copolyamide used in the composition of the present invention. It may be produced easily by ordinary melt polymerization. One method to produce the copolymer used in this invention is an autoclave one-step polymerization process taught in US Patent No. 5,378,800. That process includes feeding to a reactor an aqueous salt solution of an admixture of desired diacids and diamines, heating the solution under pressure, reducing the pressure, maintaining the reaction mixture at a pressure that is not greater than about atmospheric pressure, and discharging the polyamide from the reactor. An alternative process includes preparing a prepolymer and subjecting the prepolymer to solid-phase polymerization or melt-mixing in an extruder to increase the degree of polymerization. The prepolymer is prepared by heating at 150°C-320°C an aqueous solution containing 6T salt (a salt formed from hexamethylenediamine and terephthalic acid) and 66 salt (a salt formed from hexamethylenediamine and adipic acid). An alternative process consists of subjecting 6T salt and 66 salt directly to solid-phase polymerization at a temperature lower than the melting point:

The composition used in the present invention contains an inorganic filler or reinforcing agent that includes, for example, fibrous reinforcement such as glass fiber and carbon fiber, glass beads, talc, kaolin, wollastonite and mica. Preferable among them is glass fiber. Glass fibers suitable for use in the present invention are those generally used as a reinforcing agent for thermoplastics resins and thermosetting resins. Preferred glass fiber is in the form of glass rovings, glass chopped strands, and glass yam made of continuous glass filaments 3-20 micron meters in diameter.

The resin composition used in the present invention contains a flame retardant. It is a flame retardant based on brominated polystyrene and/or brominated poly-phenylene ether containing 50-70% by weight bromine. The polystyrene has a weight-average molecular weight higher than 5000; preferably higher than 20.000, and more preferably higher than 28,000. The ether has a molecular weight of at least 6000. A preferred flame retardant is brominated polystyrene or polydibromostyrene.

In a composition used according to the present invention, the bromine-containing flame retardant is used in combination with an auxiliary flame retardant that is a specific antimony compound which is selected from the group consisting of antimony trioxide, antimony tetraoxide, antimony pentoxide and sodium antimonate. Sodium antimonate is preferred.

It is possible to attain a UL-94 (test date October 29. 1996) rating of V-0 using the compositions described above without zinc borate. However, the polyamides of this invention have inherently high processing temperatures because of the relatively high melting point of the polyamides of 280°C to 340°C. These high processing temperatures can cause a black streak or discoloration of the polymer during extrusion and molding.

Therefore an important feature of this invention is the use of zinc borate in the compositions described above. Zinc borate is known in the art as being effective as a drip suppressant, a flame retardant synergist for improving the tracking performance of a resin, and for improving corrosion resistance. However, the present invention is based on the discovery that when zinc borate is added to the composition of a polyamide, an inorganic filler, a flame retardant and an antimony compound as described above, the resulting molding composition exhibits improved color when molded. Further, the molding composition may be held under longer hold times in a molding device with no decrease in the color quality of the molded part.

The copolyamide resin used in the present invention may have incorporated in it a variety of additives such as an impact modifier, a viscosity modifier pigment, dye, antioxidant, and heat resistance improver, in such amounts that they do not harm its characteristic properties.

### EXAMPLES

The present invention is illustrated by the following examples and comparative examples.

A mixture of 6T/66 (55/45 mole percent), sodium antimonate sold as Sunepoch® NA1070L by Nissan Chemical, PDBS-80^{™} polydibromostyrene (contains 59 weight percent bromine) sold by Great Lakes. and Firebrake® 290 zinc borate (2ZnO·3B₂O₃·3.5H₂O) or Firebrake® 500 zinc borate (2ZnO·3B₂O₃) sold by Borax, was extruded on twin screw extruder equipped with a side feeder (ZSK-40: W&P) and pelletized. In Examples 4 and 6. the flame retardant was Pyro-Chek® 68PBC. brominated polystyrene supplied by Ferro (contains 66 weight percent bromine).

All the samples contained 1.0% of DuPont's Surlyn® 8920 (sodium ionomer resin) and 0.2% Hoechst FED 521 (oxidized polyethylene wax). The remainder of each composition was polyamide.

The color stability of the pelletized mixture was evaluated by molding at 340°C a plate having dimensions of 50 mm by 90 mm by 3.2 mm while varying the hold up-time in the mold among 3 minutes. 10 minutes and 15 minutes. Conventional molding processes typically, use a hold-up time of less than 10 minutes. All the mechanical properties were measured using ASTM test procedures:

| | |
|---|---|
| Tensile Strength and Elongation: | ASTM D638-95 |
| Flexural Modulus and Strength: | ASTM D790-95A |
| Notched Izod Strength: | ASTM D256-93A |

All were in the ASTM volume dated June 1996.

Flammability was tested according to UL94 using molded bars with a 1/32 inch thickness (0.79375 millimeters).

The results from the Examples are summarized in the Table below. Examples I to 4 show that zinc borate improved the color stability of the polyamide resin composition.

In Examples 1 to 3, the composition that included polydibromostyrene flame retardant exhibited color stability even after a 15-minute hold time. In Example 4, the composition that included the Pyrochek® flame retardant, also showed color stability. The molded part had a color lighter than the molded part in Example 6. The mechanical properties showed no deterioration even when 2% of zinc borate was added. In Examples 1-4, stability was good even after 10 minutes at 340°C.

Examples 5-7 are comparative Examples. Comparative Example 5 showed a lack of color stability because it exhibited a black streak on the molded part after a 10-minute hold time. In Comparative Example 7, there was an improvement in color stability of the molded part after the addition of 0.06% of zinc borate, but the improvement was not significant.

**TABLE**

| | | Examples | | | | Comparative Examples | | |
|---|---|---|---|---|---|---|---|---|
| No | | 1 | 2 | 3 | 4 | 5 | 6 | 7 |
| Base Nylon Type | | 6T/66 | 6T/66 | 6T/66 | 6T/66 | 6T/66 | 6T/66 | 6T/66 |
| Glass | (%) | 30 | 30 | 30 | 40 | 30 | 40 | 30 |
| PDBS-80^{™} | (%) | 24 | 24 | 24 | - | 24 | - | 24 |
| Pyro-chek® 68PBC | (%) | - | - | - | 17 | - | 17 | - |
| Sodium Antimonate | (%) | 4 | 4 | 4 | 2 | 4 | 4 | 4 |
| Firebrake® 290 | (%) | 0.15 | 0.3 | 0.9 | - | 0 | 0 | 0.06 |
| Firebrake® 500 | (%) | - | - | - | 2 | - | - | - |
| Tensile Strength | (MPa) | 151 | 161 | 150 | 208 | | 203 | 150 |
| Elongation | (%) | 1.8 | 2.0 | 1.8 | 1.8 | | 1.8 | 1.8 |
| Flex Strength | (MPa) | 212 | 230 | 207 | 282 | | 274 | 213 |
| Flex Modulus | (MPa) | 10272 | 10407 | 10379 | 14621 | 150 | 14676 | 10300 |
| Notched Izod | (J/m) | 71 | 84 | 64 | 116 | 1.8 | 110 | 69 |
| Flammability (1/32"t) | UL94 | V-0 | V-0 | V-0 | V-0 | 209 | V-0 | V-0 |
| State after 3 min at 340°C | | A | A | A | A* | A | A | A |
| State after 10 min at 340°C | | A | A | A | - | C | - | B |
| State after 15 min at 340°C | | C | B | A | - | D | - | C |

| | | | | | | | | |
|---|---|---|---|---|---|---|---|---|
| A: No black streak on sprue, runner and molded parts B: Black streak only on sprue and runner C: Black streak on sprue, runner and edge of molded parts D: Black streak on sprue, runner and more than half area of molded parts. * = lighter color than Example 6 | | | | | | | | |

## Claims

1. Use of from 0.1 to 4 wt% zinc borate for improving the colour stability of a polyamide resin-containing molding composition comprising 20-80 wt% of a polyamide having a melting point of from 280°C to 340°C; 0 to 50 wt% of an inorganic filler; 10 to 35 wt% of a flame retardant with 50-70 wt% bromine; and 1 to 10 wt% of an antimony compound, where the above weight percents are based upon the total amount of polyamide, inorganic filler, flame retardant, antimony compound and zinc borate only.

## Patentansprüche

1. Verwendung von 0,1 bis 4 Gew.-% Zinkborat zur Verbesserung der Farbstabilität einer Polyamidharz enthaltenden Formmasse, die Folgendes umfasst: 20-80 Gew.-% eines Polyamids mit einem Schmelzpunkt von 280 °C bis 340 °C; 0 bis 50 Gew.-% eines anorganischen Füllstoffs; 10 bis 35 Gew.-% eines Flammschutzmittels mit 50-70 Gew.-% Brom; und 1 bis 10 Gew.-% einer Antimonverbindung, worin die vorstehenden Gewichtsprozente auf die Gesamtmenge von nur des Polyamids, des anorganischen Füllstoffs, des Flammschutzmittels, der Antimonverbindung und des Zinkborats bezogen sind.

## Revendications

1. Utilisation de 0,1 à 4 % en pds de borate de zinc pour améliorer la stabilité des couleurs d'une composition de moulage contenant une résine de type polyamide comprenant 20 à 80 % en pds d'un polyamide ayant un point de fusion de 280°C jusqu'à 340°C ; 0 à 50 % en pds d'une charge minérale, 10 à 35 % en pds d'un produit ignifuge avec 50 à 70 % en pds de brome ; et 1 à 10 % en pds d'un composé de type antimoine, où les pourcentages en poids ci-dessus sont basés sur la quantité totale du polyamide, de la charge minérale, du produit ignifuge, du composé de type antimoine et du borate de zinc uniquement.
